# EUROPÄISCHE PATENTANMELDUNG

(11) **EP 4 696 596 A1**
(43) Veröffentlichungstag der Anmeldung: **18.02.2026**
(21) Anmeldenummer: 24194344.8
(22) Anmeldetag: 13.08.2024
(51) Int. Cl.: B62K 3/04, B62K 25/28, B62M 6/60, B62M 6/55

(54) **FAHRRAD**

(71) Anmelder: Nicolai, Karlheinz, 31089 Duingen Lübbrechtsen (DE)
(72) Erfinder: Nicolai, Karlheinz, 31089 Duingen Lübbrechtsen (DE)
(74) Vertreter: Gramm, Lins & Partner Patent- und Rechtsanwälte PartGmbB

(57) **Zusammenfassung**

Die Erfindung betrifft ein Fahrrad (10) mit einem Rahmen (36), einem Hinterrad (61), einer Hinterrad-Abtriebsscheibe (52), die in eine Antriebsdrehrichtung (R) drehstarr mit dem Hinterrad (61) verbunden ist, einem Antrieb (100), der einen Elektromotor (101) mit einer Elektromotorwelle (102) und ein Hinterrad-Getriebe (49), das den Elektromotor (101) mit der Hinterrad-Abtriebsscheibe (52) verbindet, aufweist, einem Pedalantrieb (20), der eine Tretlagerwelle (21) hat, einem Gegenmomenterzeuger (26), der ausgebildet ist zum Erzeugen eines vorgebbaren Gegendrehmoments, das einem an der Tretlagerwelle (21) anliegenden Pedaldrehmoment entgegenwirkt, und einen Generator (40), der von der Tretlagerwelle (21) angetrieben wird, aufweist, und einer Schwinge (58), die am Rahmen (36) befestigt ist und an der das Hinterrad (61) gelagert ist, wobei die Elektromotorwelle (102) und die Hinterrad-Abtriebsscheibe (52) unmittelbar antreibende Welle versetzt zu einer Schwingen-Momentanschwenkachse (37) der Schwinge (58) angeordnet ist.

## Beschreibung

Die Erfindung betrifft ein Fahrrad mit (a) einem Rahmen, (b) einem Hinterrad, (c) ein der Hinterrad-Abtriebsscheibe, die, insbesondere zumindest, in eine Antriebsdrehrichtung drehstarr mit dem Hinterrad verbunden ist, (d) einem Antrieb, der (i) einen Elektromotor mit einer Elektromotorwelle und (ii) ein Hinterrad-Getriebe, das den Elektromotor mit der Hinterrad-Abtriebsscheibe verbindet, aufweist, (i) einem Pedalantrieb, der eine Tretlagerwelle hat, (f) einem Gegenmomenterzeuger, der (i) ausgebildet ist zum Erzeugen eines vorgebbaren gegen Drehmoments, dass einem an der Tretlagerwelle anliegenden Pedaldrehmoment entgegenwirkt, und (ii) einen Generator, der von der Tretlagerwelle angetrieben wird, aufweist, (g) einer Schwinge, die am Rahmen befestigt ist und an der das Hinterrad gelagert ist.

Ein derartiges Fahrrad ist aus der EP 1 165 188 B1 bekannt. Nachteilig an diesem Fahrrad ist, dass es eine ungünstige Nickneigung haben kann.

Der Erfindung liegt die Aufgabe zugrunde, Nachteile im Stand der Technik zu vermindern.

Die Erfindung löst das Problem durch ein gattungsgemäßes Fahrrad, bei dem die Elektromotorwelle und eine die Hinterrad-Abtriebsscheibe unmittelbar antreibende Welle versetzt zu einer Schwingen-Momentanschwenkachse der Schwinge angeordnet sind. Wenn die Elektromotorwelle die Hinterrad-Abtriebsscheibe unmittelbar antreibende Welle ist, löst die Erfindung das Problem durch ein gattungsgemäßes Fahrrad, bei dem die Elektromotorwelle versetzt zur Schwingen-Momentanschwenkachse angeordnet ist.

Vorteilhaft an dem Fahrrad ist, dass jede Lage der Elektromotorwelle bzw. der Hinterrad-Abtriebsscheibe unmittelbar antreibenden Welle so gewählt werden kann, dass eine gewünschte Nickneigung erhalten wird.

Wenn an dieser Stelle von gewünschter Nickneigung die Rede ist, so wird im englischen Sprachraum auch oft die Bezeichnung Anti-Squat-Verhalten gewählt. Das Anti-Squat-Verhalten bei einem Fahrrad bezeichnet eine Eigenschaft des Rahmens und der Federung, die verhindert, dass sich das Hinterrad beim Treten absenkt. Dies wird durch eine spezielle Anordnung der Drehpunkte und Streben erreicht. Wenn das System unter einer Tretlast steht, erzeugt die Tretlast mittelbar eine Gegenkraft, die das Einsinken der Federung aufgrund von Massenträgheiten ausgleicht. Dies führt zu einer effizienteren Kraftübertragung und verhindert Energieverlust. Ein gutes Anti-Squat-Design verbessert die Pedaliereffizienz, insbesondere beim Bergauf-Fahren oder Beschleunigen, da die Federung stabil bleibt und das Rad besser auf dem Boden haftet, was die Traktion und Kontrolle erhöht.

Im Rahmen der vorliegenden Beschreibung wird unter dem Elektromotor diejenige Einheit verstanden, die mit dem Rotor und dem Stator in einem Gehäuse angeordnet ist. Insbesondere kann der Elektromotor ein Reduziergetriebe aufweisen.

Unter einem Fahrrad wird insbesondere ein Fahrzeug verstanden, bei dem zum Antrieb Muskelkraft notwendig ist.

Vorzugsweise ist das Fahrrad ein einspuriges Fahrrad. Alternativ oder zusätzlich besitzt das Fahrrad genau ein Hinterrad und genau ein Vorderrad. In diesem Fall kann das Fahrrad in der Regel besonders schmal und/oder zudem Verbindung steif gebaut werden. Dadurch, dass die Elektromotorwelle und eine die Hinterrad-Abtriebsscheibe unmittelbar antreibende Welle versetzt zur Schwingen-Momentanschwenkachse der Schwinge angeordnet sind, kann die Schwinge stabil und breit gelagert werden und das Fahrrad kann trotzdem in schmaler Bauweise ausgeführt werden.

Alternativ kann das Fahrrad zweispurig sein. Beispielsweise besitzt das Fahrrad 3 oder 4 Räder ein derartiges Fahrrad ist vorzugsweise ein Elektro-Lastenfahrrad. Ein Elektro-Lastenfahrrad ist ein Fahrrad, das ausgebildet ist zum Transportieren von Lasten, insbesondere von Lasten oberhalb von 30 kg, insbesondere 40 kg, insbesondere 50 kg, insbesondere 60 kg, insbesondere 70 kg, und/oder das ausgebildet ist zum Transportieren von zumindest einer erwachsenen Person zusätzlich zum Fahrer. Unter dem Merkmal, dass das Elektro-Lastenfahrrad entsprechend ausgebildet ist, wird insbesondere verstanden, dass es nicht nur geeignet ist, eine zusätzliche Person aufzunehmen, wie es beispielsweise auf einem Gepäckträger eines Nicht-Lastenfahrrad ebenfalls möglich ist, sondern dass das Lastenfahrrad zum Transport der zumindest einen zusätzlichen Person ausgebildet ist. Vorzugsweise entspricht das Lastenfahrrad DIN 79010.

Im Rahmen der folgenden Beschreibung wird unter einem Antrieb eine Vorrichtung verstanden, die ein Drehmoment erzeugt, dass auf das Hinterrad wirkt. Der Antrieb kann ein Reduziergetriebe aufweisen, das vom Rotor des Elektromotors angetrieben wird.

Unter der Hinterrad-Abtriebsscheibe wird ein rundes Bauteil verstanden, auf das ein Drehmoment übertragen wird und dass dieses Drehmoment auf das Hinterrad überträgt. Die Hinterrad-Abtriebsscheibe kann ein Zahnrad, eine Zahnriemenscheibe, eine Zahnradscheibe oder eine Riemenscheibe, die keine Zähne hat, sein.

Unter dem Merkmal, dass der Gegenmomenterzeuger ausgebildet ist zum Erzeugen eines vorgebbaren Gegendrehmoments, das einem an der Tretlagerwelle anliegenden Pedaldrehmoment entgegenwirkt, wird insbesondere auch verstanden, dass der Gegenmomenterzeuger in der Lage ist, ein Gegendrehmoments zu erzeugen, dass das anliegende Pedaldrehmoment vollständig kompensiert. In diesem Zustand bewegt sich die Tretlagerwelle und eine gegebenenfalls damit verbundene Pedale nicht mit einer gleichmäßigen Trittfrequenz ohne, dass der Radfahrer das Gefühl hat, ins Leere zu treten.

Günstig ist es, wenn die Hinterrad-Abtriebsscheibe über einen Freilauf mit dem Hinterrad verbunden ist. Es ist aber auch möglich, dass die Hinterrad-Abtriebsscheibe in beide Drehrichtungen drehstarr mit dem Hinterrad verbunden ist.

Gemäß einer Ausführungsform ist das Hinterrad-Getriebe ein Zugmittelgetriebe, dass (i) ein Zugmittel, insbesondere einen Riemen, (ii) eine Hinterrad-Antriebsscheibenwelle, die mit der Elektromotorwelle des Antriebs zumindest in eine Antriebsdrehrichtung drehstarr mittelbar oder unmittelbar verbunden ist, hat, wobei (iii) das Hinterradantriebs-Übersetzungsverhältnis des Hinterrad-Getriebes betragsmäßig größer als 1 ist und ins Langsame übersetzt. Auf diese Weise kann das Drehmoment auch bei beweglicher Schwinge gut auf das Hinterrad übertragen werden. Durch das große Hinterradantriebs-Übersetzungsverhältnis kann ein schnelldrehender, aber vergleichsweise drehmomentarmer und damit günstig herstellbarer Elektromotor verwendet werden.

Die Hinterrad-Abtriebsscheibe ist Teil des Hinterrad-Getriebes.

Günstig ist es, wenn das Hinterrad-Getriebe zumindest in Teilen in Fahrtrichtung vor der Hinterradabtriebsscheiben-Drehachse angeordnet ist. Vorzugsweise liegt die Elektromotorwelle in Fahrtrichtung vor der Hinterradabtriebsscheiben-Drehachse.

Vorzugsweise ist die Hinterradantriebsscheiben-Drehachse von der Tretlagerwelle um einen Achsversatz beabstandet. Das erlaubt eine schmale Bauweise.

Gemäß einer Ausführungsform ist das Zugmittel seitlich von der Mittelebene des Fahrrades beabstandet. Die Mittelebene ist diejenige vertikale Ebene des Fahrrads, in der bei Geradeausfahrt des Fahrrads die Kontaktpunkte der Reifen mit dem Boden liegen. In der Regel ist die Mittelebene eine Spiegelsymmetrieebene für die Felgen.

Gemäß einer Ausführungsform besitzt der Pedalantrieb ein Pedalgetriebe, das ins Schnelle übersetzt. Vorzugsweise enthält das Pedalgetriebe ein Zahnradgetriebe und/oder ein Zugmittelgetriebe, insbesondere einen Zahnriemenantrieb. Günstig ist es, wenn ein Pedalgetriebe-Übersetzungsverhältnis zumindest 20, insbesondere zumindest 30 beträgt. In dieser Ausführung kann der Gegenmomenterzeuger klein und leicht gebaut werden und trotzdem hohe Momente erzeugen.

Gemäß einer Ausführungsform ist das Zugmittelgetriebe ein Zahnriementrieb und/oder der Riemen ein Zahnrieben. Vorzugsweise besitzt das Hinterrad-Getriebe, insbesondere der Riementrieb, einen Riemenspanner, der angeordnet ist zum Ausüben einer Spannkraft auf ein Leertrum des Riemens. Da die Elektromotorwelle und eine die Hinterrad-Abtriebsscheibe unmittelbar antreibende Welle versetzt zur Schwingen-Momentanschwenkachse der Schwinge angeordnet ist, ändert sich der Abstand von der Hinterradabtriebsscheiben-Drehachse von der sie unmittelbar antreibenden Welle. Die sich daraus ergebende sich ändernde Spannung im Riemen, wird durch den Riemenspanner zumindest teilweise kompensiert, sodass die Spannung um zumindest den Faktor 2 weniger schwankt als sie ohne den Riemenspanner schwanken würde, wenn die Schwinge aus einer maximal ausgelenkten Nulllage in eine maximal eingefederte Lage gebracht wird. In anderen Worten gleicht der Riemenspanner den Nachteil zumindest teilweise aus, der dadurch entsteht, dass die Elektromotorwelle und eine die Hinterrad-Abtriebsscheibe unmittelbar antreibende Welle versetzt zur Schwingen-Momentanschwenkachse der Schwinge angeordnet ist.

Der Riemenspanner ist vorzugsweise an der Schwinge befestigt. Der Riemenspanner besitzt vorzugsweise eine Spannrolle, die gegen einen Riemenrücken des Riemens drückt. Vorzugsweise besitzt der Riemenspanner eine Riemenspanner-Feder, insbesondere eine Druckfeder, zum Erzeugen einer Federkraft.

Vorzugsweise besitzt der Riemenspanner eine Riemenspanner-Feder zum Erzeugen einer Federkraft, insbesondere einer Druckkraft. Die Riemenspanner-Feder kann beispielsweise auf einen Schwenkarm wirken, an dem die Spannrolle befestigt ist. Alternativ kann die Riemenspanner-Feder direkt mit einer Achse, um die die Spannrolle dreht, verbunden sein und auf diese die Federkraft ausüben.

Der Schwenkarm hat eine Schwenkarm-Drehachse, die vorzugsweise dichter an der Antriebsriemenscheiben-Drehachse liegt als die Spannrollen-Drehachse. Die Spannrolle wird dann insbesondere auf die Abtriebsriemenscheibe zu gedrückt.

Die Riemenspanner-Feder übt eine Ruhe-Federkraft aus, wenn die Schwinge maximal ausgefedert ist. Die Riemenspanner-Feder übt zudem eine Grenz-Federkraft aus, wenn die Schwinge maximal eingefedert ist. Unter dem Merkmal, dass die Schwinge maximal ausgefedert ist, wird verstanden, dass keine externe Kraft auf die Schwinge wirkt. Die Schwinge ist insbesondere dann maximal eingefedert, wenn kein weiterer Federweg zurückgelegt werden kann. Das ist beispielsweise dann der Fall, wenn das Fahrzeug aus großer Höhe auf seine Räder fällt.

Der Riemenspanner ist vorzugsweise so angeordnet, dass die Ruhe-Federkraft von der Grenz-Federkraft um höchstens 60%, insbesondere höchstens 55%, insbesondere höchstens 50%, insbesondere höchstens 45%, insbesondere höchstens 40%, insbesondere höchstens 35% abweicht. Je kleiner die Abweichung ist, desto konstanter ist die Riemenspannung über den Federweg, also über den Schwingen-Auslenkwinkel.

Der Schwingen-Auslenkwinkel wird berechnet als Winkel zwischen der Geraden durch die Abtriebsriemenscheiben-Drehachse und die Schwingen-Momentanschwenkachse im jeweils betrachteten Auslenk-Zustand der Schwinge und der Geraden durch die Abtriebsriemenscheiben-Drehachse und die Schwingen-Momentanschwenkachse bei ausgefederter Schwinge. Der kleinste Schwingen-Auslenkwinkel ist definitionsgemäß 0°.

Vorzugsweise besitzt der Riementrieb ein Riemenleitelement, dass benachbart zur Schwingen-Momentanschwenkachse angeordnet ist. Das Riemenleitelement ist angeordnet zum Ausüben einer Kraft von innen nach außen auf eine Laufseite des Riemens. Vorzugsweise ist das Riemenleitelement benachbart zur Schwingen-Momentanschwenkachse angeordnet. Vorzugsweise übt das Riemenleitelement die Kraft auf das Leertrum aus. Ein solches Riemenleitelement bewirkt, dass die Federung einen langen Federweg haben kann, ohne dass das Leertrum in Kontakt mit der Schwingen-Lagerung kommt.

Unter der Laufseite des Riemens wird die Seite verstanden, die im Betrieb mit den Riemenscheiben in Verbindung steht. Die Laufseite des Riemens weist nach innen.

Vorzugsweise umfasst die Schwingen-Lagerung eine Achse und die Schwingen-Momentanschwenkachse ist eine Schwingen-Drehachse, die durch die Achse verläuft. Vorzugsweise besitzt die Schwingen-Lagerung zwei Lager, insbesondere zwei Wälzlager, besonders bevorzugt zwei Kugellager, mittels derer die Schwinge um die Achse drehbar gelagert ist. Es ist möglich, nicht aber notwendig, dass das Riemenleitelement, das in diesem Fall vorzugsweise als zahnlose Rolle ausgebildet ist, um diese Achse drehbar gelagert ist.

Es ist möglich, nicht aber notwendig, dass das Riemenleitelement die Kraft ständig ausübt. Insbesondere ist es ausreichend, wenn das Riemenleitelement bei zumindest einer Stellung der Schwinge die Kraft ausübt. Vorzugsweise übt das Riemenleitelement die Kraft über zumindest 70%, insbesondere über 80%, des Federwegs, vorzugsweise über den gesamten Federweg, der Schwinge aus.

Vorzugsweise ist das Riemenleitelement in gleitreibender oder rollreibender Verbindung mit dem Riemen.

Das Riemenleitelement kann an der Schwinge oder am Rahmen befestigt sein.

Gemäß einer Ausführungsform beträgt eine Betragssumme aus einem Elektromotor-Abstand des Elektromotor-Schwerpunkts des Elektromotors von einer Vertikalen durch den Massenschwerpunkt des Fahrrads und einem Generator-Abstand des Generators-Schwerpunkts des Generators von der Vertikalen durch den Massenschwerpunkt des Fahrrads höchstens das 0,2-fache einer Fahrradlänge. Die Fahrtlänge wird von der Vorderseite des Vorderrads zur Hinterseite des Hinterrads gemessen. Auf diese Weise ergibt sich ein kleines Drehträgheitsmoment um die Hochachse des Fahrrads. Das Handling des Fahrzeugs wird verbessert.

Gemäß einer Ausführungsform liegt ein Anfahrnickausgleichs-Schnittpunkt (i) einer ersten Geraden durch Schwingen-Momentanschwenkachse und Hinterrad-Drehachse einerseits mit (ii) einer zweiten Geraden, die durch ein Lasttrum des Riemens des Hinterrad-Getriebes in Form des Zugmittelgetriebe verläuft, unterhalb einer dritten Geraden liegt, die durch einen Kontaktpunkt des Hinterrads mit dem Boden und unter 55°, insbesondere 50°, zur Vertikalen in Fahrtrichtung geneigt verläuft. Vorzugsweise liegt der Anfahrnickausgleichs-Schnittpunkt oberhalb einer vierten Geraden, die durch einen Kontaktpunkt des Hinterrads mit dem Boden und unter 25°, insbesondere 30°, zur Vertikalen in Fahrtrichtung geneigt verläuft. Auf diese Weise ergibt sich ein vorteilhaftes Nickverhalten des Fahrrads.

Gemäß einer Ausführungsform sind eine Elektromotorwelle des Elektromotors und eine die Hinterrad-Abtriebscheibe unmittelbar antreibende Welle in Fahrtrichtung vor der Hinterradachse angeordnet. Das führt zu einem kleinen Drehträgheitsmoment des Fahrrads um die Hochachse. Zudem verbessert sich der Fahrkomfort, da die innerhalb der Federung bewegte Masse reduziert wird.

Gemäß einer Ausführungsform befindet sich die Schwingen-Momentanschwenkachse oberhalb einer Ebene, die durch die Radachsen aufgespannt wird. Unter den Radachsen werden die Hinterrad-Drehachse des Hinterrads und die Vorderrad-Drehachse des Vorderrads verstanden. Das verbessert das Ansprechverhalten der Federung.

Gemäß einer Ausführungsform ist die Tretlagerwelle, unterhalb der Schwingen-Momentanschwenkachse angeordnet. Das ergibt ein gutes Ansprechverhalten der Federung des Fahrrads. Ein Eintauchen der Federung beim Beschleunigen kann in der Regel effektiv verhindert werden

Gemäß einer Ausführungsform beträgt der Abstand von der Schwingen-Momentanschwenkachse zur Hinterrad-Abtriebsscheibendrehachse mindestens 25%, insbesondere mindestens 35%, des Radstands. Das ergibt ein gutes Anti-Nickverhalten des Fahrrads.

Gemäß einer Ausführungsform besitzt das Fahrrad eine Steuerung, die ausgebildet ist zum automatischen (i) zeitabhängigen Erfassen eines Pedal-Drehmoments und (ii) Ansteuern des Antriebs, sodass ein vom Antrieb auf das Hinterrad aufgebrachtes Hinterrad-Drehmoment dem Produkt aus einem vorgebbaren Drehmomentübersetzungsfaktor und dem Pedal-Drehmoment entspricht. Auf diese Weise bewegt sich das Hinterrad auf die gleiche Weise wie es sich bewegen würde, wenn es über einen klassischen Kettenantrieb angetrieben würde.

Alternativ oder zusätzlich ist die Steuerung vorzugsweise ausgebildet zum automatischen(i) zeitabhängigen Erfassen einer Hinterrad-Winkelposition des Hinterrads und Ansteuern des Gegenmomenterzeugers, sodass eine Tretlagerwellen-Winkelposition dem Produkt aus einem vorgebbaren Drehwinkelübersetzungsfaktor und der Hinterrad-Winkelposition des Hinterrads entspricht. Der Fahrer des Fahrrads erhält damit eine haptische Rückmeldung, wie wenn das Hinterrad über einen klassischen Kettenantrieb angetrieben wäre.

Insbesondere besitzen die Tretlagerwelle und das Hinterrad mechanisch zueinander keine Kopplung und sind mechanisch unabhängig voneinander. Man könnte ein solches System auch als Drive-by-wire-Antrieb bezeichnen.

Vorzugsweise ist die Steuerung eine Regelung. Die Winkelposition wird insbesondere nicht modulo 2π angegeben, das zeitabhängige Erfassen der Tretlagerwellen-Drehachse Position der Tretlagerwelle und das Ansteuern des Antriebs erfolgen damit so, dass eine Hinterrad-Winkelposition des Hinterrads einem Produkt aus einem vorgebbaren Drehzahlübersetzungsfaktor und der Tretlagerwellen-Winkelposition entspricht. Dies ist das gleiche Verhalten wie bei einem Fahrrad mit einem klassischen Kettenantrieb.

Gemäß einer Ausführungsform hat der Elektromotor eine Elektromotorwelle, die auch als Rotor bezeichnet wird, und ein Reduziergetriebe, das eine Reduziergetriebe-Eingangswelle hat, die von der Elektromotorwelle angetrieben wird, wobei das Reduziergetriebe eine Reduziergetriebe-Ausgangswelle hat, die, insbesondere direkt, auf die Hinterrad-Antriebsscheibe wirkt. Vorzugsweise ist der Elektromotor am Rahmen befestigt.

Gemäß einer Ausführungsform bezieht der Antrieb elektrische Energie aus einem Akkumulator. Günstig ist es, wenn der Akkumulator über einen Antriebsumformer mit dem Elektromotor verbunden ist. Vorzugsweise ist der Generator über einen Generatorumformer mit dem Akkumulator mindestens innerhalb von bestimmten Zeiträumen zum Laden verbunden und entnimmt innerhalb von anderen Zeiträumen Energie aus dem Akkumulator.

Gemäß einer Ausführungsform führt der Generatorumformer den Ladevorgang des Akkumulators während der Fahrt des Fahrrads nur dann aus, wenn eine Tretlagerwellen-Winkel-geschwindigkeit einen vorgegebenen, insbesondere festen oder variablen, Generatordrehzahl-Grenzwert überschreitet.

Bis zu einer bestimmten Drehzahl der Tretlagerwelle benötigt der Generator elektrische Energie, um als Gegenmomenterzeuger zu arbeiten. Ab dem Generatordrehzahl-Grenzwert speist der Generator elektrische Energie in den Akkumulator zurück.

Gemäß einer Ausführungsform liegt eine Generatorwellen-Drehachse einer Generatorwelle des Generators in Fahrtrichtung des Fahrrads vor einer Hinterradantriebsscheiben-Drehachse der Hinterrad-Antriebsscheibe liegt. Das verbessert die Wendigkeit des Fahrrads, da der Hinterbau kurz gehalten werden kann.

Günstig ist es, wenn die Generatorwellen-Drehachse oberhalb der Tretlagerwellen-Drehachse der Tretlagerwelle liegt. Auch das verbessert die Wendigkeit des Fahrrads und sorgt für ausreichend Bodenfreiheit am Fahrzeug.

Gemäß einer Ausführungsform liegt die Generatorwellen-Drehachse in Fahrtrichtung vor der Tretlagerwelle, insbesondere mindestens 50 mm vor der Tretlagerwelle.

Alternativ oder zusätzlich liegt die Generatorwellen-Drehachse in Fahrtrichtung maximal 200 mm vor der Tretlagerwelle, insbesondere maximal 150 mm, insbesondere maximal 90 mm, vor der Tretlagerwelle. Das verbessert die Wendigkeit des Fahrrads und sorgt für eine ausgewogene Verteilung der Bauteile im Fahrzeug, vor allen Dingen um auch einen Stoßdämpfer in der Konstruktion unterzubringen.

Gemäß einer Ausführungsform ist Steuerung eingerichtet, die folgenden Schritte automatisch auszuführen (a) Empfangen von Tretmomentdaten, die repräsentativ für ein von einem Radfahrer erzeugtes Pedal-Drehmoment sind und/oder (b) Empfangen von Trittfrequenzdaten, die repräsentativ für eine Trittfrequenz des Radfahrers sind oder die repräsentativ für eine Winkelstellung oder Winkelgeschwindigkeit der Tretkurbeln sind, und/oder (c) Empfangen von Geschwindigkeitsdaten, die repräsentativ für die Geschwindigkeit des Fahrzeugs sind oder die repräsentativ sind für eine Winkelgeschwindigkeit am Antrieb. Anhand dieser Daten steuert die Steuerung den Antrieb an. Die Steuerung kann dazu eine Computervorrichtung aufweisen und/oder als Regelung ausgebildet sein.

Gemäß einer Ausführungsform ist die Steuerung eingerichtet zum automatischen Empfangen von Neigungsdaten, die repräsentativ sind für die Neigung des Fahrrads im Raum, insbesondere in Nickrichtung des Fahrrads. Insbesondere sind die Neigungsdaten repräsentativ für eine Steigung oder Gefälle, die das Fahrrad hoch- oder hinabfährt. Anhand dieser Daten kann die Steuerung, wie gemäß einer bevorzugten Ausführungsform vorgesehen, einen optimalen Drehwinkelübersetzungsfaktor berechnen.

Gemäß einer Ausführungsform ist die Steuerung eingerichtet zum automatischen Empfangen von Bedienerdaten, die repräsentativ sind für die gewollte Beeinflussung des Fahrbetriebs durch den Fahrradfahrer. Beispielsweise umfassen die Bedienerdaten eine Gangstufenzahl und/oder einen Drehwinkelübersetzungsfaktor. Auf diese Weise kann der Fahrradfahrer die Gangstufen nach seinen Bedürfnissen anpassen oder sogar quasi stufenlos wählen.

Gemäß einer Ausführungsform ist die Steuerung eingerichtet zum automatischen Empfangen von Gangschaltungsdaten, die repräsentativ sind für das Verhältnis zwischen Tretlagerwellen-Winkelposition und Hinterrad-Winkelposition des Hinterrads. Diese Gangschaltungsdaten können beispielsweise von einer Eingabevorrichtung ausgelesen werden, mittels der der Fahrradfahrer eine entsprechende Eingabe tätigen kann. Die Eingabevorrichtung kann beispielsweise eine Tastatur, ein berührungsempfindlicher Bildschirm und/oder ein Mobiltelefon, das mit der Steuerung drahtgebunden oder drahtlos verbunden ist, sein.

Gemäß einer Ausführungsform ist die Steuerung eingerichtet zum automatischen Ermitteln einer Unterstützungsleistung in Abhängigkeit von mindestens einem der empfangenen Daten.

Gemäß einer Ausführungsform ist die Steuerung eingerichtet zum automatischen Ausgeben von Steuerdaten für den Antrieb, wobei die Steuerdaten eine Unterstützungsleistung durch den Antrieb kodieren. Auf diese Weise erhält der Fahrradfahrer die Unterstützungsleistung, die er gewählt hat und/oder die für ihn am günstigsten ist. Insbesondere sind die Steuerdaten repräsentativ für die Erzeugung einer bestimmten, den Steuerdaten zugeordneten, Unterstützungsleistung.

Gemäß einer bevorzugten Ausführungsform ist die Steuerung ausgebildet zum automatischen Durchführen eines Verfahrens, bei dem der Drehwinkelübersetzungsfaktor stufenlos geändert wird.

Gemäß einer Ausführungsform ist die Steuerung ausgebildet zum automatischen Durchführen eines Verfahrens mit den Schritten (a) Erfassen eines Akku-Ladezustands und (b) wenn der Akku-Ladezustand einen vorgegebenen Minimalwert unterschreitet, Setzen des Drehmomentübersetzungsfaktors auf einen Wert, der so klein ist, dass die vom Generator abgegebene elektrische Leistung so groß ist, dass eine weitere Verminderung des Akku-Ladezustands verhindert wird. Das verhindert eine zu starke Entleerung des Akkus, was den Akku beschädigen könnte. Beispielsweise liegt der vorgegebene Minimalwert zwischen 10% und 20% der Kapazität des Akkumulators.

Gemäß einer Ausführungsform ist die Steuerung so ausgebildet, dass die Gangschaltungsdaten mittelbar oder unmittelbar durch den Fahrradfahrer während der Fahrt eingestellt werden können. Alternativ oder zusätzlich werden die Gangschaltungsdaten nahezu kontinuierlich oder in kurzen Abständen innerhalb der Steuerung berechnet und an den Antrieb gesendet.

Unter dem Merkmal, dass die Gangschaltungsdaten mittelbar während der Fahrt eingestellt werden können, wird insbesondere verstanden, dass der Fahrradfahrer Regeln vorgeben kann, anhand derer die Gangschaltungsdaten aus vorgegebenen Daten, insbesondere den Tretmomentdaten, Trittfrequenzdaten, Geschwindigkeitsdaten oder Neigungsdaten oder seinen persönliche Präferenzen berechnet werden. Unter dem Merkmal, dass die Gangschaltungsdaten unmittelbar durch den Fahrradfahrer eingestellt werden können, wird insbesondere verstanden, dass der Fahrradfahrer während der Fahrt die Gangschaltungsdaten direkt eingeben kann, beispielsweise in die Bedienvorrichtung und/oder ein Mobiltelefon, das mit der Steuerung verbunden ist.

Unter "nahezu kontinuierlich" wird insbesondere verstanden, dass die Gangschaltungsdaten zumindest einmal pro Sekunde, insbesondere zehnmal pro Sekunde, berechnet werden. Unter einem kurzen Abstand wird ein Abstand von höchstens 3 Sekunden, insbesondere höchstens 2 Sekunden, vorzugsweise höchstens 1 Sekunde, verstanden.

Gemäß einer Ausführungsform ist die Steuerung ausgebildet zum Berechnen der Tretmomentdaten, insbesondere mittels einer Computervorrichtung, aus mindestens einem, insbesondere zwei, der Daten aus der folgenden Gruppe: (a) Stromdaten, die elektrische Stromstärken innerhalb der Wicklungen des Generators repräsentieren, (b) Spannungsdaten, die elektrische Spannungen innerhalb des Generators repräsentieren, (c) Phasendaten, die die zeitlichen Verschiebungen zwischen Strömen oder Spannungen innerhalb des Generators repräsentieren, (d) Trittfrequenzdaten, die repräsentativ für eine Trittfrequenz des Radfahrers sind oder die repräsentativ für eine Winkelstellung oder Winkelgeschwindigkeit der Tretkurbeln sind, und/oder (e) Generatorwinkeldaten, die repräsentativ sind für die Winkelposition oder Winkelgeschwindigkeit an der Generatorwelle in Relation zum Gehäuse.

Gemäß einer Ausführungsform befindet sich die Hinterradantriebsscheiben-Drehachse oberhalb der Tretlagerwelle, wobei der Achsversatz minimal 60 mm, insbesondere minimal 90 mm, und maximal 175 mm, insbesondere maximal 120 mm, beträgt. Auf diese Weise ergibt sich eine ausgewogene Anordnung der notwendigen Bauteile im Fahrzeug. Vor allen Dingen kann die Konstruktion sehr kompakt und leicht aufgebaut werden.

Gemäß einer Ausführungsform liegt die Generatorwellen-Drehachse der Generatorwelle unterhalb und in Fahrtrichtung vor der Hinterradantriebsscheiben-Drehachse. So ergibt sich ein vergleichsweise tiefliegender Schwerpunkt und ein stabiles Fahrverhalten.

Gemäß einer Ausführungsform liegt die Hinterradantriebsscheiben-Drehachse der Hinterradantriebsscheibe maximal 80 mm, vorzugsweise maximal 40 mm, vorzugsweise maximal 15 mm bezüglich der Fahrtrichtung hinter einer Tretlagerwellen-Drehachse der Tretlagerwelle und/oder maximal 120 mm, vorzugsweise maximal 60 mm, vorzugsweise maximal 5 mm bezüglich der Fahrtrichtung vor der Tretlagerwellen-Drehachse. Es hat sich herausgestellt, dass diese Abstände günstige Fahreigenschaften des Fahrrads bewirken.

Gemäß einer Ausführungsform ist die Steuerung ausgebildet zum automatischen Durchführen eines Verfahrens, bei dem (a) der Drehwinkelübersetzungsfaktor nicht kleiner wählbar ist als ein Minimal-Drehmomentübersetzungsfaktor, bei dem sich die Tretlagerwelle relativ zu einer Fahrbahn während einer Kurbelumdrehung der Tretlagerwelle um 750 mm bewegt und/oder (b) der Drehwinkelübersetzungsfaktor nicht größer wählbar ist als ein Maximal-Drehmomentübersetzungsfaktor, bei dem sich die Tretlagerwelle relativ zu einer Fahrbahn während einer Kurbelumdrehung der Tretlagerwelle um 12650 mm bewegt und/oder (c) der Quotient aus Maximal-Drehmomentübersetzungsfaktor und Minimal-Drehmomentübersetzungsfaktor minimal 4 ist und maximal 16, bevorzugt zwischen 5 und 7 angeordnet ist. Es hat sich herausgestellt, dass mit derartigen Parametern ein besonders gut einsetzbares Fahrrad erreicht wird.

Um mit einem Akkumulator im Fahrzeugbetrieb eine große Reichweite zu erreichen, sollte die Leistungsaufnahme vom Antrieb nur leicht höher sein als die Leistung, die vom Generator in den Akkumulator eingespeist wird. Wenn ein Fahrrad in einer Umgebung bewegt wird, die sehr große Steigungen besitzt, ist es sinnvoll, mit einer konstanten Trittfrequenz auch sehr langsame Geschwindigkeiten zu fahren und hierbei sehr große Drehmomente am Hinterrad zu generieren, um die Steigungen zu überwinden. Um den Akkumulator nicht stark zu belasten, sollten diese großen Drehmomente am Antrieb jedoch nur bei kleiner Drehzahl bereitgestellt werden. Die Leistungsaufnahme vom Antrieb wird so in sinnvollen Grenzen gehalten. Natürlich will man nur so langsam fahren, dass man mit einem Zweirad nicht umfallen kann. Dieser Fall einer sehr langsamen Fahrt ist dadurch gekennzeichnet, dass zwei Kurbelumdrehungen beispielsweise eine Umdrehung am Hinterrad zur Folge hat. Ein relativ kleines Hinterrad hat ungefähr 50 Zentimeter Durchmesser und somit einen Umfang von ungefähr 1500 mm. Es ist somit vorteilhaft, wenn der Drehwinkelübersetzungsfaktor nicht kleiner wählbar ist als ein Minimal-Drehmomentübersetzungsfaktor, bei dem sich die Tretlagerwelle relativ zu einer Fahrbahn während einer Kurbelumdrehung der Tretlagerwelle um 750 mm bewegt. Bei einer Trittfrequenz von 60 Umdrehungen pro Minute bewegt sich das Fahrzeug so beispielsweise sehr langsam mit 45 Meter pro Minute oder 2,7 Kilometer pro Stunde.

Wenn ein Fahrrad in einer Umgebung bewegt wird, die abschüssig ist, ist es sinnvoll, mit einer konstanten Trittfrequenz auch hohe Geschwindigkeiten fahren zu können und hierbei Drehmomente am Hinterrad zu generieren, die eine konstant hohe Fahrgeschwindigkeit zulassen. Dieser Fall einer schnellen Fahrt ist dadurch gekennzeichnet, dass eine Kurbelumdrehung beispielsweise 5,5 Umdrehungen am Hinterrad zur Folge hat. Ein relativ großes Hinterrad hat ungefähr 73 cm Durchmesser und somit einen Umfang von ungefähr 2300 mm. Es ist somit vorteilhaft, wenn der Drehwinkelübersetzungsfaktor nicht größer wählbar ist als ein Maximal-Drehmomentübersetzungsfaktor, bei dem sich die Tretlagerwelle relativ zu einer Fahrbahn während einer Kurbelumdrehung der Tretlagerwelle um 12650 mm bewegt. Bei einer Trittfrequenz von 60 Umdrehungen pro Minute bewegt sich das Fahrzeug so beispielsweise schnell mit 759 Meter pro Minute oder 45,54 Kilometer pro Stunde. Das entspricht der Maximalgeschwindigkeit eines Speed-Pedelecs.

Der Quotient aus Maximal-Drehmomentübersetzungsfaktor und Minimal-Drehmomentübersetzungsfaktor entspricht der Bandbreite der elektromagnetische Fahrradschaltung. Bei einem gegebenen Fahrrad mit einem gegebenen Raddurchmesser ist dieser Wert bevorzugt zwischen 5 und 7 angeordnet. Über alle möglichen Fahrräder mit variablen Raddurchmessern ist dieser Wert bevorzugt zwischen 4 und 16 angeordnet. Wenn an dieser Stelle von einer elektromagnetischen Fahrradschaltung die Rede ist, so ist diese dadurch gekennzeichnet, dass die mittelbare Kopplung zwischen der Tretlagerwelle und dem Hinterrad nicht vollständig mechanisch erreicht wird, sondern mindestens an einer Stelle allein über eine oder mehrere elektrische oder elektromagnetische Verbindungen vollzogen wird.

Im Folgenden wird die Erfindung anhand der beigefügten Zeichnungen näher erläutert. Dabei zeigt
- Figur 1: ein erfindungsgemäßes Fahrrad gemäß einer ersten Ausführungsform in einer maßstabsgerechten Ansicht von der Seite,
- Figur 2: ein erfindungsgemäßes Fahrrad gemäß einer zweiten Ausführungsform in einer maßstabsgerechten Ansicht von der Seite und
- Figur 3: ein erfindungsgemäßes Fahrrad gemäß einer dritten Ausführungsform in einer maßstabsgerechten Ansicht von der Seite.

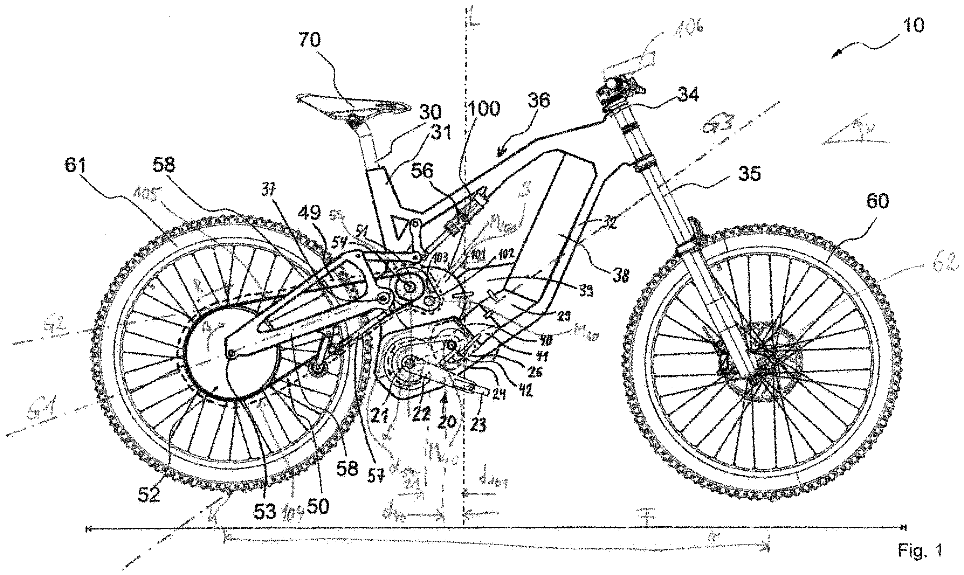

**Figur 1** zeigt eine maßstabsgerechte Ansicht eines erfindungsgemäßen Fahrrads 10 mit einem Hilfsantrieb 100. Das Fahrrad 10 hat einen Pedalantrieb 20 mit einer Tretlagerwelle 21, um die sich an jedem Ende der Tretlagerwelle 21 eine Tretkurbel 22 rotieren lässt. An jeder Tretkurbel 22 befindet sich ein Pedal 23. Zudem hat das Fahrrad 10 einen Rahmen 36 mit einer Sattelstrebe 30, einem Sattelrohr 31, einem Unterrohr 32, einem Steuerrohr 34 und eine mit dem Steuerrohr 34 verbundene Gabel 35. An der Gabel 35 ist ein Vorderrad 60 angeordnet.

Wenn sich eine Winkelstellung α der Tretkurbel 22 ändert, wird in die Tretlagerwelle 21 ein Drehmoment eingeleitet, das von dort auf ein Pedalgetriebe 24 übertragen wird. Das Pedalgetriebe 24 treibt eine Generatorwelle eines Generators 40 eines Gegenmomenterzeuger 26 an.

Das Fahrrad 10 hat ein Hinterrad 61, dass an einer Schwinge 58 befestigt ist, die ihrerseits am Rahmen 36 befestigt ist. Und eine Hinterrad-Abtriebsscheibe 52, die in eine Antriebsdrehrichtung R drehstarr mit dem Hinterrad 61 verbunden ist. Die Tretleistung eines Radfahrers wird unterstützt von einem Antrieb 100, der einen Elektromotor 101 mit einer Elektromotorwelle 102 und ein Hinterrad-Getriebe 49, das den Elektromotor 101 mit der Hinterrad-Abtriebsscheibe 52 verbindet, aufweist.

Der Gegenmomenterzeuger 26 erzeugt ein Gegendrehmoment, das einem an der Tretlagerwelle anliegenden Pedaldrehmoment entgegenwirkt. Der Radfahrer erhält so eine haptische Rückmeldung.

Es ist zu erkennen, dass die Elektromotorwelle 102 und die die Hinterrad-Abtriebsscheibe 52 unmittelbar antreibende Welle versetzt zu einer Schwingen-Momentanschwenkachse 37 der Schwinge 58 angeordnet ist. Im vorliegenden Fall ist das Fahrrad 10 einspurig und besitzt genau ein Hinterrad 61 und genau ein Vorderrad 60.

In der in Figur 1 gezeigten Ausführungsform ist das Hinterrad-Getriebe 49 ein Zugmittelgetriebe, das ein Zugmittel 50 in Form eines Riemens eine Hinterrad-Antriebsscheibe 51, die mit der Elektromotorwelle 102 des Antriebs 100 zum Antreiben verbunden ist, beispielsweise über einen Freilauf.

Ein Hinterradantriebs-Übersetzungsverhältnis V des Hinterrad-Getriebes 49 ist beispielsweise größer als 3 und es wird ins Langsame übersetzt. Es ist zu erkennen, dass die Hinterradantriebscheiben-Drehachse 54 von der Tretlagerwelle 21 um einen Achsversatz d₅₄₋₂₁ beabstandet ist.

Das Pedalgetriebe 24 übersetzt ins Schnelle und besitzt im vorliegenden Fall einen Zahnriementrieb. Ein Pedalgetriebe-Übersetzungsverhältnis U beträgt beispielsweise zumindest 20, insbesondere zumindest 30.

Um die Spannung im Riemen 50 möglichst konstant zu halten, besitzt das Hinterrad-Getriebe vorzugsweise einen Riemenspanner, der angeordnet ist zum Ausüben einer Spannkraft auf ein Leertrum 104 des Riemens 50.

Der Elektromotor 101 hat einen Elektromotor-Abstand d₁₀₁ von einer Vertikalen L durch den Massenschwerpunkt M₁₀ des Fahrrads 10. Entsprechend hat der Generator 40 einen Generator-Abstand d₄₀ von der Vertikalen L. Die Betragssumme | d₁₀₁ + d₄₀| beträgt vorzugsweise höchstens das **0,2-fache** einer Fahrradlänge F.

Figur 1 zeigt eine erste Gerade G1 durch die Schwingen-Momentanschwenkachse 37 und die Hinterrad-Drehachse 53, sowie eine zweite Gerade G2 durch ein Lasttrum 105 des Riemens des Hinterrad-Getriebes 49. Beide Geraden G1, G2 schneiden sich in einem ein Anfahrnickausgleich-Schnittpunkt S. Dieser Anfahrnickausgleich-Schnittpunkt S liegt unterhalb einer dritten Geraden G3, die durch einen Kontaktpunkt K des Hinterrads 61 mit dem Boden und unter 55° zur Vertikalen L in Fahrtrichtung B geneigt, verläuft.

Das Fahrrad besitzt eine Steuerung 29, die beispielsweise mit einer nicht eingezeichneten Batterie mit elektrischem Strom versorgt wird. Die Steuerung 29 ist ausgebildet zum automatischen zeitabhängigen Erfassen eines Pedal-Drehmoments und zum Ansteuern des Antriebs 100, sodass ein vom Antrieb 100 auf das Hinterrad 61 aufgebrachtes Hinterrad-Drehmoment dem Produkt aus einem vorgebbaren Drehmomentübersetzungsfaktor und dem Pedal-Drehmoment entspricht. Das Pedaldrehmoment wird beispielsweise mittels Dehnungsmessstreifen erfasst. Die Steuerung steht beispielsweise mit einer Motorsteuerung des Elektromotors in Verbindung oder steuert den Elektromotor direkt an.

Alternativ oder zusätzlich ist die Steuerung 99 ausgebildet zum zeitabhängigen Erfassen einer Hinterrad-Winkelposition β des Hinterrads 61 und zum Ansteuern des Gegenmomenterzeugers 26, sodass eine Tretlagerwellen-Winkelposition dem Produkt aus einem vorgebbaren Drehwinkelübersetzungsfaktor und der Hinterrad-Winkelposition des Hinterrads entspricht. Der Radfahrer bekommt dadurch das Gefühl, ein Fahrrad zu fahren, dessen Hinterrad mechanisch mit der Pedale gekoppelt ist. Tatsächlich aber sind die Tretlagerwelle 21 und das Hinterrad 61 mechanisch ungekoppelt und mechanisch unabhängig voneinander.

Pedaliert der Radfahrer, entnimmt der Antrieb 100 elektrische Energie aus einem Akkumulator 38. Die elektrische Energie des Akkumulators 38 wird über einen Antriebsumformer 39, der beispielsweise ein frequenzvariabler Umformer sein kann, dem Elektromotor 101 zugeführt.

Die Energie, die der Radfahrer über die Tretkurbel auf die Tretlagerwelle überträgt, wird vom Generator über einen Generatorumformer 41 in den Akkumulator 38 eingespeichert. Da der Gegenmomenterzeuger 26 elektrische Energie benötigt, findet der Ladevorgang des Akkumulators während der Fahrt nur dann statt, wenn die Tretlagerwellen-Winkelgeschwindigkeit *α̇* einen festen oder variablen Generatordrehzahl-Grenzwert α_{L} überschreitet.

Die Steuerung 29 kann ein Kommunikationsmodul aufweisen, mittels dem es mit einem Mobiltelefon 106 in Verbindung treten kann. Auf diese Weise kann der Radfahrer das Mobiltelefon 106 als Eingabegerät verwenden und beispielsweise ein vorgegebenes Übersetzungsverhältnis V an die Steuerung 29 senden. In anderen Worten werden so Gangschaltungsdaten empfangen, die repräsentativ sind für das Verhältnis zwischen Tretlagerwellen-Winkelposition und Hinterrad-Winkelposition des Hinterrads.

Die Steuerung 29 empfängt kontinuierlich Tretmomentdaten, die repräsentativ für ein von einem Radfahrer erzeugtes Pedal-Drehmoment sind und beispielsweise mittels eines Drehmomentsensors an der Tretlagerwelle 21 gemessen werden.

Über einen Drehgeber, der an einer Welle befestigt ist, die zumindest in eine Drehrichtung drehstarr mit der Tretkurbel 22 verbunden ist, erfasst die Steuerung 99 zudem Trittfrequenzdaten, die repräsentativ für eine Trittfrequenz des Radfahrers sind oder die repräsentativ für eine Winkelstellung α oder Winkelgeschwindigkeit der Tretkurbel 22 sind.

Die Steuerung 99 kann zudem einen Neigungssensor enthalten, mittels dem eine Neigung, beispielsweise ein Neigungswinkel v zur Horizontalen gemessen werden kann.

Die Steuerung berechnet aus den erfassten Daten die Leistung, die der Antrieb 100 abgeben soll und steuert den Antrieb 100 entsprechend an. Dadurch, dass eine Drehgeschwindigkeit *γ̇* des Elektromotors 101 weitgehend frei gewählt werden kann, kann ein Drehwinkelübersetzungsfaktor k = α / β = bzw. k = *α̇* / *β̇* stufenlos und/oder kontinuierlich geändert werden.

Der Drehwinkelübersetzungsfaktor k ist ein Gangschaltungsdatum, das, beispielsweise mittels des Mobiltelefons 106, mittelbar durch den Fahrradfahrer während der Fahrt eingestellt werden kann. Alternativ oder zusätzlich kann die Steuerung 29 den Drehwinkelübersetzungsfaktor kontinuierlich Berechnen und einstellen.

Anstatt durch einen Dehnungsmessstreifen können die Tretmomentdaten auch aus Stromdaten bestimmt werden, die elektrische Stromstärken innerhalb der Wicklungen des Generators 40 repräsentieren. Äquivalent dazu sind Spannungsdaten, die elektrische Spannungen innerhalb des Generators repräsentieren. Zudem können Phasendaten, die die zeitlichen Verschiebungen zwischen Strömen oder Spannungen innerhalb des Generators repräsentieren, zur Berechnung des Trennelements verwendet werden.

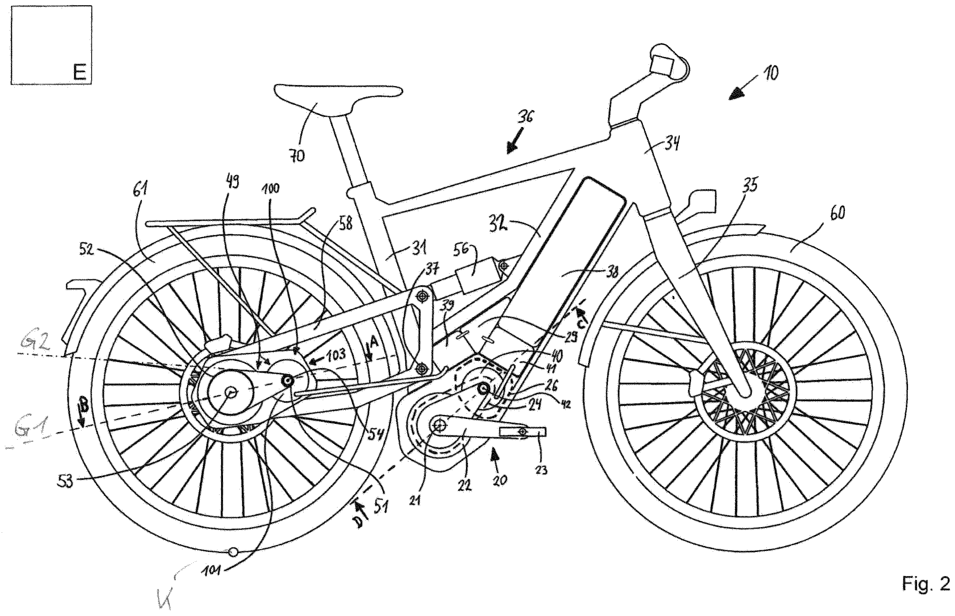

Figur 2 zeigt eine Ausführung vom eines erfindungsgemäßen Fahrrads 10, bei dem der Elektromotor 101 an der Schwinge 58 befestigt ist.

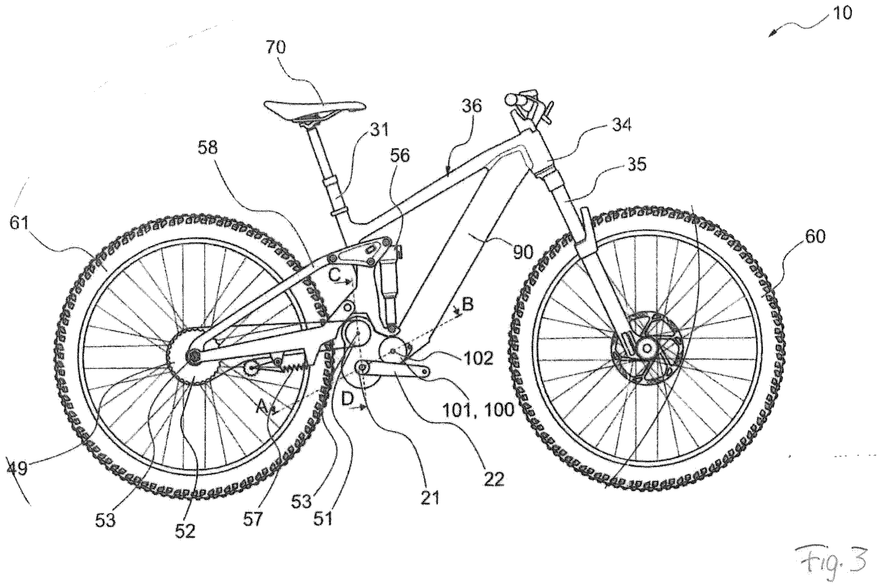

Figur 3 zeigt eine weitere Ausführungsform eines erfindungsgemäßen Fahrrads 10 in Form eines Mountainbikes.

### Bezugszeichenliste

| | | | |
|---|---|---|---|
| *10* | *Fahrrad* | | Drehachse |
| *20* | *Pedalantrieb* | *54* | *Hinterradantriebsscheiben-Drehachse* |
| *21* | *Tretlagerwelle* | | |
| *22* | *Tretkurbel* | 56 | Dämpfer |
| *23* | *Pedal* | 57 | Spanner |
| 24 | Pedalgetriebe | *58* | *Schwinge* |
| *26* | *Gegenmomenterzeuger* | *60* | *Vorderrad* |
| 27 | Freilauf | *61* | *Hinterrad* |
| 28 | Zugmittel | *62* | *Vorderrad-Drehachse* |
| *29* | *Steuerung* | 70 | Sattel |
| *30* | *Sattelstrebe* | *100* | *Antrieb* |
| *31* | *Sattelrohr* | *101* | *Elektromotor* |
| *32* | *Unterrohr* | *102* | *Elektromotorwelle* |
| *34* | *Steuerrohr* | 103 | *Reduziergetriebe* des Elektromotors |
| *35* | *Gabel* | | |
| *36* | *Rahmen* | 104 | Leertrum |
| 37 | Schwingen- Momentanschwenkachse | 105 | Lasttrum |
| 38 | Akkumulator | α | Winkelstellung der Tretkurbel |
| 39 | Hilfsantriebsumformer | *α̇* | Winkelgeschwindigkeit der Tretkurbel |
| *40* | *Generator* | | |
| 41 | Generatorumformer | β | Winkelstellung des Hinterrads |
| 42 | Generatorwellen-Drehachse | *β̇* | Winkelgeschwindigkeit des Hinterrads |
| *49* | *Hinterrad-Getriebe* | | |
| 50 | Zugmittel des Hinterrad- Zugmitteltriebs, Riemen | *γ̇* | Drehgeschwindigkeit des Elektromotors |
| 51 | Hinterrad-Antriebsscheibe | v | Neigungswinkel |
| *52* | *Hinterrad-Abtriebsscheibe* | | |
| 53 | Hinterradabtriebsscheiben- Drehachse, Hinterrad- | B | Fahrtrichtung |
| | | d₅₄₋₂₁ | Achsversatz |

| | | | |
|---|---|---|---|
| d₁₀₁ | Elektromotor-Abstand | M₄₀ | Generator-Schwerpunkt |
| E | Mittelebene | M₁₀₁ | Elektromotor-Schwerpunkt |
| F | Fahrradlänge | r | Radstands |
| G | Gerade | R | Antriebsdrehrichtung |
| k | Drehwinkelübersetzungsfaktor | S | Anfahrnickausgleich-Schnittpunkt |
| K | Kontaktpunkt | | |
| L | Vertikale | U | Übersetzungsverhältnis |
| M₁₀ | Massenschwerpunkt des Fahrrads | v | Geschwindigkeit |
| | | V | Übersetzungsverhältnis |

## Patentansprüche

1. Fahrrad (10) mit
(a) einem Rahmen (36),
(b) einem Hinterrad (61),
(c) einer Hinterrad-Abtriebsscheibe (52), die in eine Antriebsdrehrichtung (R) drehstarr mit dem Hinterrad (61) verbunden ist,
(d) einem Antrieb (100), der
(i) einen Elektromotor (101) mit einer Elektromotorwelle (102) und
(ii) ein Hinterrad-Getriebe (49), das den Elektromotor (101) mit der Hinterrad-Abtriebsscheibe (52) verbindet, aufweist,
(e) einem Pedalantrieb (20), der eine Tretlagerwelle (21) hat,
(f) einem Gegenmomenterzeuger (26), der
(i) ausgebildet ist zum Erzeugen eines vorgebbaren Gegendrehmoments, das einem an der Tretlagerwelle (21) anliegenden Pedaldrehmoment entgegenwirkt, und
(ii) einen Generator (40), der von der Tretlagerwelle (21) angetrieben wird, aufweist, und
(g) einer Schwinge (58),
die am Rahmen (36) befestigt ist und
an der das Hinterrad (61) gelagert ist,
**dadurch gekennzeichnet, dass**
(h) die Elektromotorwelle (102) und die Hinterrad-Abtriebsscheibe (52) unmittelbar antreibende Welle versetzt zu einer Schwingen-Momentanschwenkachse (37) der Schwinge (58) angeordnet ist.

2. Fahrrad (10) nach Anspruch 1, **dadurch gekennzeichnet, dass**
(a) das Hinterrad-Getriebe (49) ein Zugmittelgetriebe ist, das
(i) ein Zugmittel (50), insbesondere einen Riemen, und
(ii) eine Hinterrad-Antriebsscheibe (51), die mit der Elektromotorwelle (102) des Antriebs (100) zumindest in eine Antriebsdrehrichtung (R) drehstarr verbunden ist, hat,
(iii) wobei ein Hinterradantriebs-Übersetzungsverhältnis (V) des Hinterrad-Getriebes (49) betragsmäßig größer als eins ist und ins Langsame übersetzt,
(b) wobei eine Hinterradantriebscheiben-Drehachse (54) von der Tretlagerwelle (21) um einen Achsversatz (d₅₄₋₂₁) beabstandet ist,
(c) wobei das Zugmittel (50) seitlich von der Mittelebene (E) des Fahrrades (10) beabstandet ist.

3. Fahrrad (10) nach Anspruch 2, **dadurch gekennzeichnet, dass** der Pedalantrieb (20) ein Pedalgetriebe (24) hat, welches
(a) ins Schnelle übersetzt,
(b) ein Zahnradgetriebe und/oder ein Zugmittelgetriebe, insbesondere einen Zahnriemenantrieb, enthält, und
(c) ein Pedalgetriebe-Übersetzungsverhältnis (U) von zumindest 20, insbesondere zumindest 30, hat.

4. Fahrrad nach Anspruch 3, **dadurch gekennzeichnet, dass** das Hinterrad-Getriebe (49) einen Riemenspanner (28) aufweist, der angeordnet ist zum Ausüben einer Spannkraft auf ein Leertrum (104) des Riemens (50).

5. Fahrrad nach einem der vorstehenden Ansprüche, **dadurch gekennzeichnet, dass** eine Betragssumme aus
einem Elektromotor-Abstand (d₁₀₁) des Elektromotor-Schwerpunkts (M₁₀₁) des Elektromotors (101) von einer Vertikalen (L) durch den Massenschwerpunkt (M₁₀) des Fahrrads und
einem Generator-Abstand (d₄₀) des Generator-Schwerpunkts (M₄₀) des Generators (40) von der Vertikalen (L) durch den Massenschwerpunkt (M₁₀) des Fahrrads
höchstens das 0,2-fache einer Fahrradlänge (F) beträgt.

6. Fahrrad nach einem der vorstehenden Ansprüche, **dadurch gekennzeichnet, dass**
(a) ein Anfahrnickausgleich-Schnittpunkt (S)
(i) einer ersten Geraden (G1) durch Schwingen-Momentanschwenkachse (37) und Hinterrad-Drehachse (53) einerseits mit
(ii) einer zweiten Geraden (G2), die durch ein Lasttrum (105) des Riemens des Hinterrad-Getriebes in Form des Zugmittelgetriebe verläuft,
unterhalb einer dritten Geraden (G3) liegt, die durch einen Kontaktpunkt (K) des Hinterrads mit dem Boden und unter 55° zur Vertikalen (L) in Fahrtrichtung (B) geneigt verläuft und
(b) eine Elektromotorwelle (102) des Elektromotors (101) und eine die Hinterrad-Abtriebscheibe (52) unmittelbar antreibende Welle (55) in Fahrtrichtung (B) vor der Hinterrad-Drehachse (53) angeordnet sind.

7. Fahrrad nach einem der vorstehenden Ansprüche, **dadurch gekennzeichnet, dass**
(a) die Schwingen-Momentanschwenkachse (37) sich oberhalb einer Ebene befindet, die durch die Radachsen (53, 62) aufgespannt wird und
(b) die Tretlagerwelle (21), unterhalb der Schwingen-Momentanschwenkachse (37) angeordnet ist und
(c) der Abstand von der Schwingen-Momentanschwenkachse (37) zur Hinterrad-Abtriebsscheibendrehachse (53) mindestens 25%, insbesondere mindestens 35% des Radstands (r) beträgt.

8. Fahrrad (10) nach einem der vorstehenden Ansprüche, **dadurch gekennzeichnet, dass**
(a) der Antrieb (100) elektrische Energie aus einem Akkumulator (38) bezieht, wobei der Akkumulator (38) über einen Antriebsumformer (39) mit dem Elektromotor (101) verbunden ist, und
(b) der Generator (40) über einen Generatorumformer (41) mit dem Akkumulator (38) mindestens innerhalb von bestimmten Zeiträumen zum Laden verbunden ist und innerhalb von anderen Zeiträumen Energie aus dem Akkumulator (38) entnimmt, wobei
(c) der Generatorumformer (41) den Ladevorgang des Akkumulators (38) während der Fahrt nur dann ausführt, wenn eine Tretlagerwellen-Winkelgeschwindigkeit einen festen oder variablen Generatordrehzahl-Grenzwert überschreitet.

9. Fahrrad (10) nach einem der vorstehenden Ansprüche, **dadurch gekennzeichnet, dass**
eine Generatorwellen-Drehachse (42) einer Generatorwelle des Generators (40)
(a) in Fahrtrichtung des Fahrrads (10) vor einer Hinterradantriebsscheiben-Drehachse (54) der Hinterrad-Antriebsscheibe (51) liegt und
(b) oberhalb und in Fahrtrichtung vor der Tretlagerwellen-Drehachse (110) der Tretlagerwelle (21) liegt und
(c) in Fahrtrichtung vor der Tretlagerwelle (21) liegt, insbesondere mindestens 50 mm vor der Tretlagerwelle (21) und
(d) in Fahrtrichtung maximal 200 mm vor der Tretlagerwelle (21), insbesondere maximal 150 mm, insbesondere maximal 100 mm, vor der Tretlagerwelle (21) liegt.

10. Fahrrad nach einem der vorstehenden Ansprüche, **dadurch gekennzeichnet, dass** die Steuerung (29) die ausgestaltet ist, die folgenden Schritte automatisch auszuführen:
(a) Empfangen von Tretmomentdaten, die repräsentativ für ein von einem Radfahrer erzeugtes Pedal-Drehmoment sind und
(b) Empfangen von Trittfrequenzdaten, die repräsentativ für eine Trittfrequenz des Radfahrers sind oder die repräsentativ für eine Winkelstellung (α) oder Winkelgeschwindigkeit der Tretkurbel (22) sind, und
(c) Empfangen von Geschwindigkeitsdaten, die repräsentativ für die Geschwindigkeit (v) des Fahrrads sind oder die repräsentativ sind für eine Winkelgeschwindigkeit am Antrieb,
(d) optional Empfangen von Neigungsdaten, die repräsentativ sind für die Neigung (v) des Fahrrads (10) im Raum und
(e) optionale Empfangen von Bedienerdaten, die repräsentativ sind für die gewollte Beeinflussung des Fahrbetriebs durch den Radfahrer und
(f) empfangen von Gangschaltungsdaten, die repräsentativ sind für das Verhältnis zwischen Tretlagerwellen-Winkelposition und Hinterrad-Winkelposition des Hinterrads und
(g) Ermitteln einer Unterstützungsleistung in Abhängigkeit von mindestens einem der empfangenen Daten und
(h) Ausgeben von Steuerdaten für den Antrieb, wobei die Steuerdaten eine Unterstützungsleistung durch den Antrieb kodieren.

11. Fahrrad (10) nach einem der vorstehenden Ansprüche, **dadurch gekennzeichnet, dass** die Steuerung (29) ausgebildet ist zum automatischen Durchführen eines Verfahrens, bei dem der Drehwinkelübersetzungsfaktor, insbesondere stufenlos, geändert wird.

12. Fahrrad (10) nach einem der vorstehenden Ansprüche, **dadurch gekennzeichnet, dass** die Steuerung (29) ausgebildet ist zum automatischen Durchführen eines Verfahrens mit den Schritten
(a) Erfassen eines Akku-Ladezustands und
(b) wenn der Akku-Ladezustand einen vorgegebenen Minimalwert unterschreitet, Setzen des Drehmomentübersetzungsfaktor auf einen Wert, der so klein ist, dass die vom Generator abgegebene elektrische Leistung so groß ist, dass eine weitere Verminderung des Akku-Ladezustand verhindert wird.

13. Fahrrad nach einem der Ansprüche 10 bis 12, **dadurch gekennzeichnet, dass** die Gangschaltungsdaten
(a) mittelbar durch den Fahrradfahrer während der Fahrt eingestellt werden können oder
(b) nahezu kontinuierlich oder in kurzen Abständen innerhalb der Steuerung berechnet und eingestellt werden.

14. Fahrrad nach einem der vorstehenden Ansprüche, **dadurch gekennzeichnet, dass**
(a) die Hinterradantriebscheibendrehachse (54) sich oberhalb der Tretlagerwelle (21) befindet und wobei der Achsversatz minimal 60 mm, insbesondere minimal 90 mm, und maximal 175 mm beträgt, insbesondere maximal 120 mm,
(b) eine Generatorwellen-Drehachse (42) einer Generatorwelle des Generators (40) unterhalb und in Fahrtrichtung vor der Hinterradantriebsscheiben-Drehachse (54) liegt.
(c) eine Hinterradantriebsscheiben-Drehachse (54) der Hinterradantriebsscheibe (51) maximal 80 mm, vorzugsweise maximal 40 mm, vorzugsweise maximal 15 mm bezüglich der Fahrtrichtung hinter einer Tretlagerwellen-Drehachse (110) der Tretlagerwelle (21) und/oder maximal 120 mm, vorzugsweise maximal 60 mm, vorzugsweise maximal 5 mm bezüglich der Fahrtrichtung vor der Tretlagerwellen-Drehachse (110) befindet.

15. Fahrrad (10) nach einem der vorstehenden Ansprüche, **dadurch gekennzeichnet, dass** die Steuerung (29) ausgebildet ist zum automatischen Durchführen eines Verfahrens, bei dem
(a) der Drehwinkelübersetzungsfaktor nicht kleiner wählbar ist als ein Minimal-Drehmomentübersetzungsfaktor, bei dem sich die Tretlagerwelle (21) relativ zu einer Fahrbahn während einer Kurbelumdrehung der Tretlagerwelle (21) um 750 Millimeter bewegt und/oder
(b) der Drehwinkelübersetzungsfaktor nicht größer wählbar ist als ein Maximal-Drehmomentübersetzungsfaktor, bei dem sich die Tretlagerwelle (21) relativ zu einer Fahrbahn während einer Kurbelumdrehung der Tretlagerwelle (21) um 12650 Millimeter bewegt und/oder
(c) Der Quotient aus Maximal-Drehmomentübersetzungsfaktor und Minimal-Drehmomentübersetzungsfaktor minimal 4 ist und maximal 16, bevorzugt zwischen 5 und 7 angeordnet ist.
